# FASCICULE DE BREVET EUROPEEN

(11) **EP 1 062 621 B1**
(45) Date de publication et mention de la délivrance du brevet: **18.06.2003**
(21) Numéro de dépôt: 99907690.4
(22) Date de dépôt: 11.03.1999
(51) Int. Cl.: G06K 7/08

(54) **PROCEDE, SYSTEME ET DISPOSITIF POUR TRANSFERER, PAR LIAISON ELECTROMAGNETIQUE, DES INFORMATIONS ENTRE DES LECTEURS ET DES OBJETS NOMADES**
VERFAHREN, SYSTEM UND VORRICHTUNG ZUR INFORMATIONSÜBERTRAGUNG DURCH ELEKTROMAGNETISCHE VERBINDUNG ZWISCHEN LESEGERÄTEN UND NOMADISCHEN OBJEKTEN
METHOD, SYSTEM AND DEVICE FOR TRANSFERRING, BY ELECTROMAGNETIC LINKAGE, DATA BETWEEN READERS AND NOMADIC OBJECTS

(30) Priorité: 11.03.1998 FR 9803215
(43) Date de publication de la demande: 27.12.2000
(73) Titulaire: THALES e-TRANSACTIONS S.A., 78373 Plaisir (FR)
(72) Inventeur: LEVERNE, Jean-Cl., Dassault AT, 78373 Plaisir Cedex (FR)
(74) Mandataire: Lucas, Laurent Jacques
(86) Numéro de dépôt international: FR9900548
(87) Numéro de publication internationale: WO99046722

(56) Documents cités:
- EP-A- 0 282 992
- EP-A- 0 768 540

## Description

La présente invention concerne les procédés, les systèmes et les dispositifs permettant de transférer, par liaison électromagnétique de proximité, des informations entre:
- d'une part, une pluralité d'objets nomades (notamment des cartes ou des badges) ayant des caractéristiques techniques d'alimentation et des moyens de communication, notamment des méthodes de modulation et/ou des protocoles de communication différents, et
- d'autre part, des lecteurs.

On désigne par "objet nomade" dans la suite de la description tout type de support d'information portable.

Ces procédés, systèmes, dispositifs et cartes sont communément appelés "sans contact".

Le marché actuel du "sans contact" se caractérise par une très grande diversité de l'offre de cartes sans contact correspondant à une grande diversité des technologies utilisées. Cette diversité tient au fait qu'il existe plusieurs méthodes pour réaliser une téléalimentation des objets nomades à distance et plusieurs méthodes pour échanger des données avec ces objets. Les choix technologiques ont une incidence sur le coût des canes.

Dans ce contexte mouvant les opérateurs, notamment les transporteurs, hésitent à retenir une technologie "sans contact" de préférence à une autre de crainte de choisir le mauvais "futur standard". De plus, le choix d'une technologie les associe aujourd'hui à un type de carte, carte à logique câblée ou carte à microprocesseur. Dans un cas, s'ils choisissent des cartes à logique câblée, ils se privent de la possibilité de développer une télébillétique compatible avec les fonctions porte-monnaie électronique. Le choix des cartes à microprocesseur leur impose en revanche un coût de carte élevé.

Cette diversité des solutions techniques constitue donc un problème qu'il convient de résoudre. Ses conséquences économiques sont considérables. Il serait souhaitable que les transporteurs désireux d'exploiter des technologies "sans contact" puissent mettre en place une infrastructure de lecteurs universels qui leur permettrait de traiter tous les types de cartes sans contact.

L'adoption d'une norme ISO pourrait être une solution. Il existe en effet une commission de normalisation qui a pour objet de normaliser les cartes sans contact. Néanmoins les travaux de cette commission avancent lentement, compte tenu des intérêts divergents des industriels. En outre, on peut s'attendre à ce que de nouvelles technologies apparaissent sur le marché. Elles viendront perturber ces travaux de normalisation. C'est en particulier le cas des recherches effectuées sur les étiquettes ou sur les canes à très courte distance de couplage.

Il a été décrit, notamment dans la demande de brevet EP 0 768 540 A1, un système comprenant un lecteur qui émet une variété de signaux d'excitation correspondant aux différents protocoles d'échange avec les objets nomades. En d'autres termes, le lecteur émet l'un après l'autre les différents protocoles et déroule complètement celui qui correspond à l'objet nomade avec lequel il communique. Un tel lecteur permet de résoudre au moins en partie le problème posé, toutefois il présente des inconvénients.

Il a été également décrit, notamment dans la demande de brevet EP 0 282 992 A2, un procédé consistant à attribuer à chaque objet nomade un code d'identification spécifique au protocole de communication qui lui est propre. L'objet nomade transmet au lecteur avec lequel il est en communication le code d'identification de son protocole. Le lecteur peut alors poursuivre l'échange en appliquant le protocole ainsi identifié. Un tel procédé suppose qu'un organisme de normalisation a établi la table des différents protocoles utilisés dans les objets nomades en allouant à chaque protocole un code de reconnaissance spécifique ayant une valeur universelle pour tous les opérateurs économiques.

Un tel lecteur permet de résoudre au moins en partie le problème posé.

Toutefois, il présente des inconvénients. En effet, un tel procédé suppose qu'un organisme de normalisation a établi la table des différents protocoles utilisés dans les objets nomades. Cette table a été établie en allouant à chaque protocole un code de reconnaissance spécifique ayant une valeur universelle pour tous les opérateurs économiques.

La présente invention vise à résoudre le problème posé et à éviter l'utilisation d'un lecteur spécifique pour chaque type de badge, sans présenter par ailleurs les inconvénients des systèmes existants.

Le procédé selon l'invention permet d'utiliser un unique lecteur universel pour lire des badges ayant des caractéristiques techniques différentes.

Le procédé selon l'invention comprend les étapes suivantes :
- (a) le lecteur universel recherche les objets nomades qui sont dans son champ de détection en émettant un signal de balayage des différents modes de modulation ;
- (b) chaque objet nomade, recevant le signal de balayage dudit lecteur universel, produit un signal écho selon son propre protocole,
caractérisé en ce que
- (c) ledit lecteur universel analyse chaque signal écho et en déduit le protocole spécifique appliqué par l'objet nomade identifié,
- (d) ledit lecteur universel insère, conformément audit protocole spécifique, les messages à émettre dans des trames lecteur interprétables par l'objet nomade identifié,
- (e) ledit lecteur universel émet à destination de l'objet nomade identifié un signal électromagnétique modulé selon lesdites trames lecteur.

En d'autres termes, la détermination par le lecteur universel du protocole spécifique de l'objet nomade considéré s'effectue en deux temps. Lors d'une première phase, le lecteur universel envoie un signal de balayage des différents modes de modulation. Ce signal de balayage induit une réaction de la part de l'objet nomade (l'émission d'un signal écho conformément au protocole inconnu de l'objet nomade). Dans une deuxième phase, le lecteur universel analyse le signal écho provenant de l'objet nomade et en déduit le protocole mis en oeuvre par l'objet nomade. Pendant la troisième phase, le lecteur universel poursuit l'échange avec l'objet nomade considéré en appliquant le protocole ainsi déterminé.

Le procédé selon l'invention est donc différent du procédé selon l'art antérieur (EP 0 768 540 A1 ou EP 0282 992 A2). Celui-ci n'enseigne pas un processus en plusieurs phases comportant une phase d'analyse par le lecteur universel des signaux émis par l'objet nomade en vue de déterminer le protocole utilisé par ce dernier.

De préférence, le procédé selon l'invention comporte en outre les étapes suivantes :
- (f) l'objet nomade identifié insère, conformément audit protocole spécifique, les messages à émettre dans des trames objet,
- (g) l'objet nomade identifié module selon lesdites trames objet un signal électromagnétique,
- (h) ledit lecteur universel démodule ledit signal électromagnétique en extrayant les messages insérés dans lesdites trames objet,
- (i) ledit lecteur universel décode les messages insérés dans les trames objet selon une méthode inverse de celle utilisée par l'objet nomade identifié pour élaborer les trames objet.

Avantageusement, le lecteur universel fournit, par télétransmission, à l'objet nomade l'énergie nécessaire pour assurer la communication avec le lecteur universel.

Il peut aussi comporter une source d'alimentation électrique telle qu'une pile ou une batterie rechargeable.

Grâce à cette combinaison de moyens, l'objet nomade peut lire le contenu des trames émises et peut communiquer au lecteur universel les trames qui lui sont spécifiques. La solution selon l'invention présente ainsi l'avantage de permettre à des opérateurs transporteurs de s'adresser à différents fabricants de cartes et de les mettre en concurrence.

La présence invention concerne également un système pour transférer, par liaison électromagnétique de proximité, des informations entre, d'une part, une pluralité d'objets nomades ayant des caractéristiques techniques d'alimentation et des moyens de communication différents, notamment des méthodes de modulation et/ou des protocoles de communications différents, et d'autre part, des lecteurs universels susceptibles d'être utilisés quelles que soient les caractéristiques des objets nomades. Ledit système est tel que :
- (a) le lecteur universel comporte des moyens des recherche pour rechercher les objets nomades qui sont dans son champ de détection ; lesdits moyens de recherche émettent un signal de balayage des différents modes de modulations ;
- (b) chaque objet nomade comporte des moyens de production de signaux, lesdits moyens de production de signaux, actionnés par ledit signal de balayage des modes de modulation, produisant un signal écho conformément au propre protocole de l'objet nomade considéré ;
caractérisé en ce que
- (c) ledit lecteur universel comporte des moyens d'analyse pour analyser ledit signal écho et en déduire le protocole spécifique appliqué par l'objet nomade considéré ;
- (d) ledit lecteur universel comporte des moyens d'insertion pour insérer, conformément audit protocole pécifique, les messages à émettre dans des trames lecteur interprétables por l'objet nomade identifié ;
- (e) ledit lecteur universel comporte des moyens d'émission pour émettre à destination de l'objet nomade identifié un signal électromagnétique modulé selon lesdites trames lecteur.

De préférence, le système selon l'invention comporte en outes les étapes suivantes :
- (f) l'objet nomade identifié comporte des moyens d'insertion pour insérer, conformément audit protocole spécifique, les messages à émettre dans des trames objet ;
- (g) l'objet nomade identifié comporte des moyens de modulation pour moduler selon lesdites trames objet un signal électromagnétique ;
- (h) ledit lecteur universel comporte des moyens de démodulation pour démoduler ledit signal électromagnétique et comporte des moyens d'extraction pour extraire les messages insérés dans lesdites trames objet ;
- (i) ledit lecteur universel comporte des moyens de décodage pour décoder les messages insérés dans les trames objet selon une méthode inverse de celle utilisée par l'objet nomade identifié pour élaborer les trames objet.

La présente invention concerne aussi un dispositif lecteur universel destiné à être utilisé pour échanger, par liaison électromagnétique de proximité, des informations avec une pluralité d'objets nomades ayant des caractéristiques techniques d'alimentation et des moyens de communication différents, notamment des méthodes de modulation et/ou des protocoles de communication différents. Ledit dispositif lecteur universel comporte :
- (a) des moyens de recherche pour rechercher les objets nomades qui sont dans son champ de détection ; lesdits moyens de recherche émettant un signal de balayage des différents modes de modulation ; ledit signal de balayage déclenchant la production d'un signal écho par l'objet nomade concerné conformément au propre protocole de l'objet normade concerné,
le dispositif lecteur étant caractérisé par
- (b) des moyens d'analyse pour analyser ledit signal écho et en déduire le protocole spécifique appliqué par l'objet nomade concerné,
- (c) des moyens d'insertion pour insérer, conformément audit protocole spécifique, les messages à émettre dans des trames lecteur interprétables par l'objet nomade identifié,
- (d) des moyens d'émission pour émettre, à destination de l'objet nomade identifié, un signal électromagnétique modulé selon lesdites trames lecteur.

De préférence, dans le cas où l'objet nomade comporte :
- des moyens d'insertion pour insérer, conformément audit protocole spécifique, les messages à émettre dans des trames objet et,
- des moyens de modulation pour moduler, selon lesdites trames objet, un signal électromagnétique, le lecteur universel comporte :

- (e) des moyens de démodulation pour démoduler ledit signal électromagnétique,
- (f) des moyens d'extraction pour extraire du signal électromagnétique démodulé les messages insérés dans lesdites trames objet,
- (g) des moyens de décodage pour décoder les messages insérés dans les trames objet selon une méthode inverse de celle utilisée par l'objet nomade identifié pour élaborer les trames objet.

D'autres caractéristiques et avantages de l'invention apparaîtront à la lecture de la description de variantes de réalisation de l'invention, données à titre d'exemple indicatif et non limitatif, et de :
- la figure 1 qui représente une vue en perspective d'une variante de réalisation du système selon l'invention ;
- la figure 2 qui représente une variante de réalisation d'un dispositif lecteur universel, sous la forme d'un schéma synoptique ;
- la figure 3 qui représente une variante de réalisation d'un badge, sous la forme d'un schéma synoptique ;

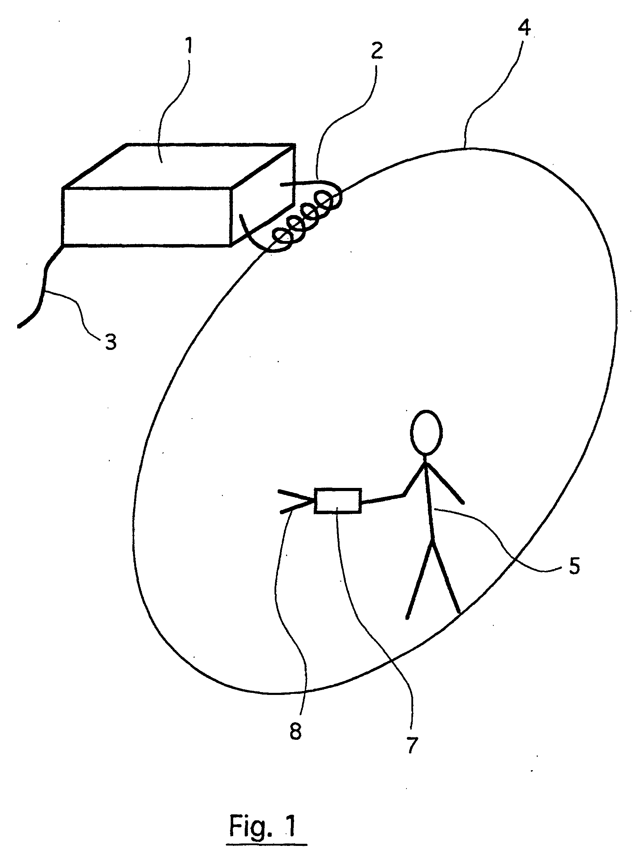

On va maintenant décrire en se référant aux figures 1, 2 et 3 comment un lecteur universel 1 et un objet nomade 7 peuvent échanger des données lorsque le lecteur universel 1 a déterminé le protocole de communication de l'objet nomade 7 concerné. On décrira ci-après comment le lecteur universel 1 détermine le protocole de communication.

La figure 1 représente une vue en perspective d'une variante de réalisation du système selon l'invention. Il comporte au moins un lecteur universel 1 et une pluralité d'objets nomades 7. Un dispositif lecteur universel 1 comprend notamment une antenne 2. Le dispositif lecteur universel 1 est alimenté via un câble 3 d'alimentation. Il émet au moyen de l'antenne 2 un champ électromagnétique de détection ou de balayage 4. Un utilisateur 5, portant un objet nomade 7, pénètre dans le champ électromagnétique de détection ou de balayage 4.

Il est à noter que l'invention n'impose aucune contrainte quant à la nature des moyens permettant de transporter l'objet nomade 7. Les moyens permettant de transporter l'objet nomade 7 peuvent être par exemple un sac, un portefeuille, un chariot de supermarché contenant les biens de consommation sur lesquels les objets nomades sont collés, un container d'un wagon sur une voie ferrée, ...). De même, l'objet nomade 7 peut être constitué, par exemple, d'un badge, d'une montre, d'une étiquette, d'une carte à logique câblée, d'une carte à microprocesseur.

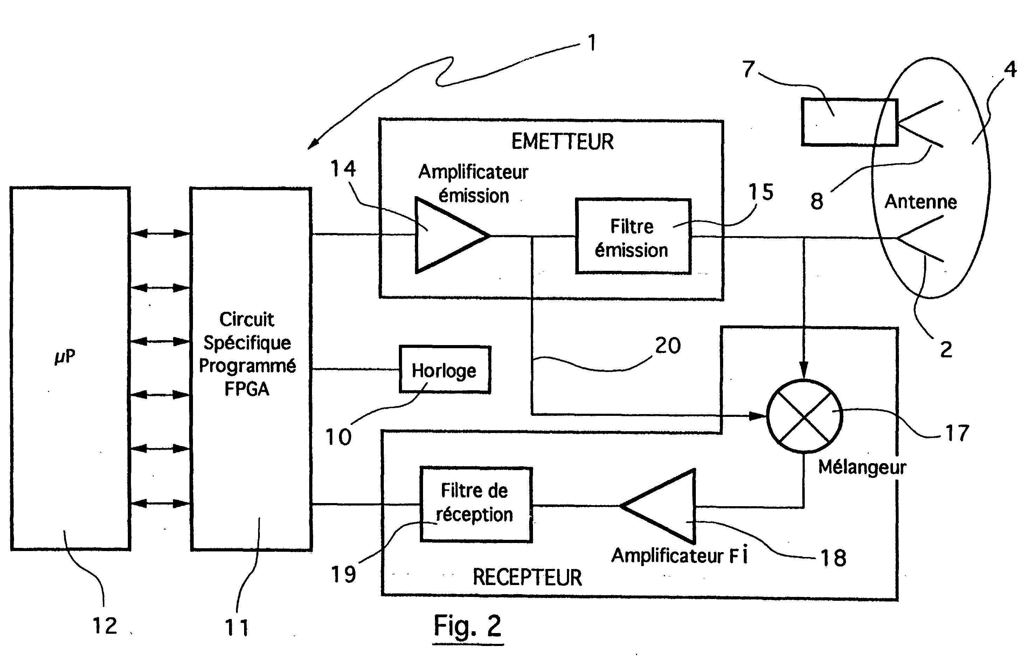

Le fonctionnement du lecteur universel est illustré par le schéma synoptique de la figure 2. Un oscillateur fournit une fréquence de référence qui sert d'horloge 10 au lecteur universel. A partir de cette horloge 10, le Circuit Spécifique Programmable (FPGA) 11 fabrique (par multiplication, division etc..) toutes les fréquences dont a besoin le lecteur universel (notamment la fréquence d'émission, etc..).

Les messages à transmettre partant du lecteur universel 1 vers le badge 7 sont générés dans un microprocesseur 12 et insérés dans les trames lecteur. La constitution des frames lecteur est réalisée soit dans le microprocesseur 12, soit dans le Circuit Spécifique Programmable (FPGA) 11, en appliquant le protocole de communication préalablement déterminé. Un signal de modulation est ensuite généré dans le Circuit Spécifique Programmable (FPGA) 11 à partir de ces trames lecteur. Le Circuit Spécifique Programmable (FPGA) 11 transmet à l'amplificateur d'émission 14 le signal de modulation et le signal d'émission. L'amplificateur d'émission 14 transfert le signal de modulation sur le signal d'émission. Ce transfert peut être également réalisé dans le Circuit Spécifique Pmgrinmable (FPGA) 11. L'amplificateur d'émission 14 amplifie le signal résultant pour qu'il atteigne un niveau qui puisse être reçu et traité par le badge 7 présent dans le champ électromagnétique 4. Un filtre d'émission 15 élimine les signaux parasites superposés au signal d'émission qui pourraient gêner la communication entre le lecteur universel 1 et le badge 7. L'antenne 2 transmet, d'une pan, les signaux d'émission du lecteur universel 1 vers le badge 7 et capte, d'autre part, les modulations du champ électromagnétique 4 porteuses des trames objet produites par le badge 7 (ainsi qu'on le verra ci-après).

Un mélangeur 17 reçoit en entrée le signal modulé par le badge 7 et contenant les trames objet produites par le badge 7 conformément à son propre protocole. Pour extraire la modulation, le mélangeur transpose ce signal à une fréquence plus basse en utilisant, via la liaison 20, une partie du signal d'émission dont il se sert comme référence dans l'opération de mélange. Il est ainsi possible, soit d'extraire directement par démodulation les trames objet produites par le badge, soit d'extraire la sous-porteuse qui contient alors les trames produites par le badge 7, en appliquant le protocole préalablement déterminé. Dans le cas d'une sous-porteuse, l'extraction des trames objet peut être réalisée par le Circuit Spécifique Programmable (FPGA) 11. L'amplificateur de réception 18 amplifie les signaux de réception provenant du mélangeur 17 pour qu'ils atteignent un niveau suffisant et puissent être traités par le Circuit Spécifique Programmable (FPGA) 11.

Un filtre de réception 19 élimine les signaux parasites qui peuvent gêner la réception. Le Circuit Spécifique Programmable (FPGA) 11, ou le microprocesseur 12, extrait les messages des trames objet reçues. Grâce à la combinaison des moyens qui viennent d'être décrits, le lecteur universel 1 peut démoduler le signal électromagnétique modulé par les moyens de communication de l'objet nomade 7 et extraire les trames objet insérées par l'objet nomade 7 dans le signal électromagnétique. Grâce à la combinaison des moyens décrits, le lecteur universel 1 peut également décoder les messages insérés dans les trames objet provenant de l'objet nomade 7, en appliquant une méthode inverse de celle utilisée par l'objet nomade 7 pour élaborer les trames objet

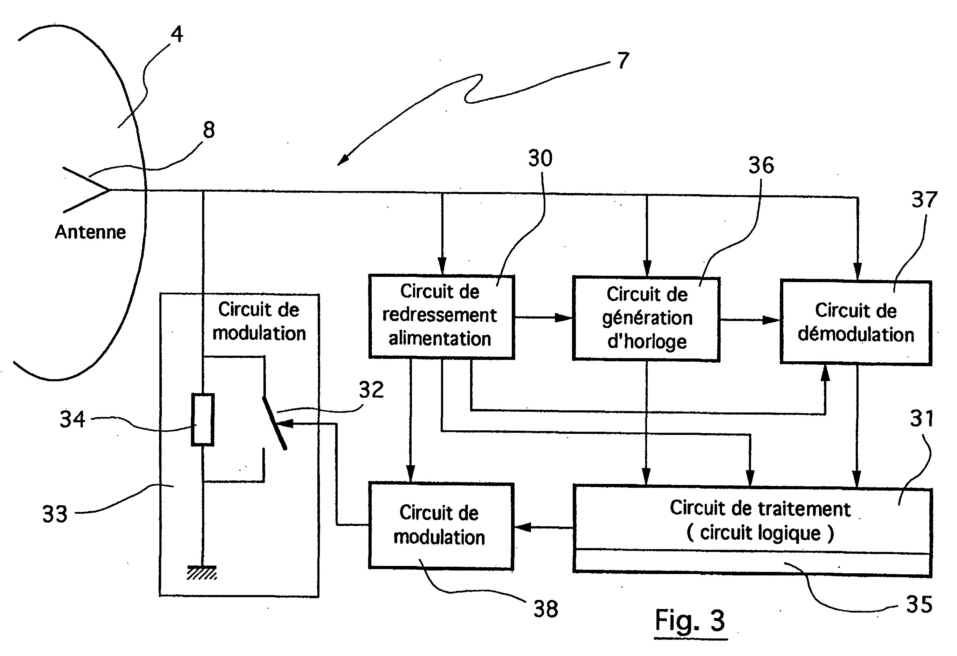

On va maintenant décrire la figure 3 qui représente une variante de réalisation du badge 7, sous la forme d'un schéma synoptique. Le lecteur universel 1 émet, par l'intermédiaire de son amplificateur 14 et de son antenne 2, un champ électromagnétique 4. Ce champ est capté par l'antenne 8 du badge 7 présent dans le champ du lecteur universel 1. Dans le cas de la variante de réalisation décrite, une partie du signal reçu par l'antenne 8 du badge 7 est convertie en énergie par un circuit de redressement et d'alimentation 30 qui fournit l'énergie nécessaire au fonctionnement du badge 7. Une pile, ou une batterie rechargeable, pourrait également être utilisée pour fournir l'énergie élechique nécessaire. Ce circuit de redressement et d'alimentation 30 alimente le circuit de génération d'horloge 36, le circuit de modulation 38, le circuit de démodulation 37 et le circuit de traitement 31 autrement appelé circuit logique. Un circuit générateur d'horloge 36 génère, à partir du signal émis par le lecteur universel 1, une référence de fréquence permettant au lecteur universel et au badge de fonctionner de manière cohérente.

Les messages contenus dans les trames lecteur émises par le lecteur universel 1 et reçues par l'antenne 8 du badge 7 sont extraits par le circuit de démodulation 37 et traités par le circuit logique 31.

Pour produire des messages binaires (des trames objet) qui puissent être captés par l'antenne 2 du lecteur universel 1, le badge 7 comporte des moyens de communication notamment un circuit logique 31 associé à un circuit de modulation 38. Le circuit logique 31 et le circuit de modulation 38 du badge 7 commutent au moyen de commutateurs électroniques 32, selon un protocole de communication et des méthodes de modulation spécifiques, un des éléments du circuit d'antenne 33 du badge 7 (par exemple la résistance de charge ou la capacité d'accord 34 de l'antenne 8). Le comportement du circuit d'antenne 33 du badge 7 peut donc varier entre différents états conformément à la trame produite par le circuit logique. Ce changement de comportement du badge 7 dans le champ électromagnétique 4 est décelé par le lecteur universel 1. Le lecteur universel 1 détecte une variation d'impédance aux bornes de son antenne 2 entre différents états qui sont en relation avec la trame produite par le circuit logique 31 du badge 7. Cette variation d'impédance aux bornes de l'antenne 2 du lecteur universel 1 se traduit par une modulation de la fréquence des signaux électriques, conformément à la trame objet produite par le circuit logique 31 du badge 7. En démodulant les signaux électriques comme il vient d'être décrit ci-dessus en se référant à la figure 2, on extrait les trames objet produites par le badge. Le lecteur universel 1 est donc en mesure d'interpréter les messages binaires produits par le badge 7.

Le circuit logique 31 du badge contient notamment une partie mémoire 35. C'est dans cette partie mémoire 35 que sont contenues des informations essentielles telles que les règles du protocole, l'identifiant du badge, les codes confidentiels, les autorisations d'accès.

On va maintenant décrire comment le lecteur universel 1 balaye les différents modes de modulation des objets nomades et détermine le protocole de communication de l'objet nomade considéré.

Le lecteur universel 1 cherche à établir un dialogue avec les objets nomades 7 qui sont dans son champ de détection 4. A cet effet, il émet à intervalles réguliers des signaux correspondants aux différents modes de modulation connus.

Un badge 7 présent dans le champ de détection 4 va réagir en émettant, conformément à son propre protocole, un signal écho (une trame objet écho) si son mode de modulation correspond effectivement au signal de balayage qu'il a capté.

Le traitement de ce signal écho permet au lecteur universel 1 d'identifier les spécificités de l'objet nomade 7 détecté. Ce traitement comprend essentiellement une étape d'identification dans une base de données du protocole correspondant au signal écho reçu.

Les caractéristiques du signal électromagnétique émis, notamment sa fréquence, sa puissance et ses modulations, correspondront aux caractéristiques du signal électromagnétique spécifique attendu par l'objet nomade 7 détecté et identifié. Le lecteur universel 1 pourra alors insérer dans le champ électromagnétique émis 4 une trame lecteur conformément au protocole de communication ainsi déterminé. Cette trame lecteur est interprétable par l'objet nomade 7.

## Revendications

1. Procédé pour transférer, par liaison électromagnétique de proximité, des informations entre
- d'une part, une pluralité d'objets nomades (7) ayant des caractéristiques techniques d'alimentation et des moyens de communication (8, 31, 32, 33, 35) différents, notamment des méthodes de modulation et/ou des protocoles de communication différents, et
- d'autre part, au moins un lecteur universel (1) susceptible d'être utilisé quelque soient les caractéristiques des objets nomades (7) ; ledit procédé comprenant les étapes suivantes :
- ledit lecteur universel (1) recherche (2, 11, 12, 17, 18, 19) lesdits objets nomades (7) qui sont dans son champ de détection (4) en émettant un signal de balayage des différents modes de modulation,
- chaque objet nomade, recovant lo signal de balayage dudit lecteur universel (1), produit (8, 31, 32, 33, 35) un signal écho selon son propre protocole,
**caractérisé en ce que**
- ledit lecteur universel (1) analyse (11, 12) chaque signal écho et en déduit le protocole spécifique (35) appliqué par l'objet nomade (7) identifié,
- ledit lecteur universel (1) insère (11, 12), conformément audit protocole spécifique, les messages à émettre dans des trames lecteur interprétables par l'objet nomade (7) identifié,
- ledit lecteur universel (1) émet (2, 14, 15) à destination de l'objet nomade (7) identifié un signal électromagnétique (4) modulé selon lesdites trames lecteur.

2. Procédé selon la revendication 1 comprenant, en outre, au moins l'une des étapes suivantes :
- l'objet nomade (7) identifié insère (31, 35), conformément audit protocole spécifique, les messages à émettre dans des trames objet,
- l'objet nomade (7) identifié module (31, 32, 33, 38) selon lesdites trames objet un signal électromagnétique (4),
- ledit lecteur universel (1) démodule (11, 12, 17, 18, 19) ledit signal électromagnétique en extrayant (11, 12) les messages insérés dans lesdites trames objet ;
- ledit lecteur universel (1) décode (11, 12) les messages insérés dans les trames objet selon une méthode inverse de celle utilisée par l'objet nomade (7) identifié pour élaborer les trames objet.

3. Procédé selon l'une quelconque des revendications 1 ou 2 tel que le lecteur universel (1) fournit, par télétransmission, à l'objet nomade (7) l'énergie nécessaire pour assurer la communication avec le lecteur universel (1).

4. Système pour transférer, par liaison électromagnétique de proximité, des informations entre,
- d'une part, une pluralité d'objets nomades (7) ayant des caractéristiques techniques d'alimentation et des moyens de communication (8, 31, 32, 33, 35) différents, notamment des méthodes de modulation et/ou des protocoles de communication différents, et
- d'autre part, au moins un lecteur universel (1) susceptible d'être utilisé quelque soient les caractéristiques des objets nomades (7); ledit système étant tel que :
- ledit lecteur universel (1) comporte des moyens de recherche (2, 11, 12, 17, 18, 19) pour rechercher les objets nomades (7) qui sont dans son champ de détection (4) ; lesdits moyens de recherche émettent un signal de balayage des différents modes de modulation ;
- chaque objet nomade (7) comporte des moyens de production de signaux (8, 31, 32, 33, 35) ; lesdits moyens de production de signaux, actionnés par ledit signal de balayage des modes de modulation, produisant un signal écho conformément au propre protocole (35) de l'objet nomade (7) considéré ;
**caractérisé en ce que**
- ledit lecteur universel (1) comporte des moyens d'analyse (11, 12) pour analyser ledit signal écho et en déduire le protocole spécifique (35) appliqué par l'objet nomade (7) considéré ;
- ledit lecteur universel (1) comporte des moyens d'insertion (11, 12) pour insérer, conformément audit protocole spécifique, les messages à émettre dans des trames lecteur interprétables par l'objet nomade (7) identifié ;
- ledit lecteur universel (1) comporte des moyens démission (2, 14, 15) pour émettre à destination de l'objet nomade (7) identifié un signal électromagnétique modulé selon lesdites trames lecteur.

5. Système selon la revendication 4 tel que :
- l'objet nomade (7) identifié comporte des moyens d'insertion (8, 31, 32, 33, 34, 35) pour insérer, conformément audit protocole spécifique, les messages à émettre dans des trames objet ;
- l'objet nomade (7) identifié comporte des moyens de modulation (31, 32, 33, 34, 38) pour moduler selon lesdites trames objet un signal électromagnétique ;
- ledit lecteur universel (1) comporte des moyens de démodulation (11, 12, 17, 18, 19) pour démoduler ledit signal électromagnétique (4) et comporte des moyens d'extraction (11, 12) pour extraire les messages insérés dans lesdites trames objet ;
- ledit lecteur universel (1) comporte des moyens de décodage (11, 12) pour décoder les messages insérés dans les trames objet selon une méthode inverse de celle utilisée par l'objet nomade (7) identifié pour élaborer les trames objet.

6. Dispositif lecteur universel (1) destiné à être utilisé pour échanger, par liaison électromagnétique de proximité, des informations avec une pluralité d'objets nomades (7) ayant des caractéristiques techniques d'alimentation et des moyens de communication (8, 31, 32, 33, 34, 35) différents, notamment des méthodes de modulation et/ou des protocoles de communication différents ;
ledit dispositif lecteur universel (1) comporte :
- des moyens de recherche (2, 11, 12, 17, 18, 19) pour rechercher les objets nomades (7) qui sont dans son champ de détection (4) ; lesdits moyens de recherche émettant un signal de balayage des différents modes de modulation ; ledit signal de balayage déclenchant la production d'un signal écho par l'objet nomade (7) concerné, conformément au propre protocole de l'objet nomade (7) concerné,
le dispositif lecteur étant **caractérisé par**
- des moyens d'analyse (11, 12) pour analyser ledit signal écho et en déduire le protocole spécifique (35) appliqué par l'objet nomade (7) concerné,
- des moyens d'insertion (11, 12) pour insérer, conformément audit protocole spécifique, les messages à émettre dans des trames lecteur interprétables par l'objet nomade (7) identifié,
- des moyens d'émission (2, 11, 12, 14, 15) pour émettre, à destination de l'objet nomade (7) identifié, un signal électromagnétique (4) modulé selon lesdites trames lecteur.

7. Dispositif lecteur universel (1) selon la revendication 6 tel que dans le cas où l'objet nomade (7) identifié comporte :
- des moyens d'insertion (31, 32, 33, 34, 35) pour insérer, conformément audit protocole spécifique, les messages à émettre dans des trames objet et,
- des moyens de modulation (32, 33, 34, 38) pour moduler selon lesdites trames objet un signal électromagnétique ;
ledit lecteur universel (1) comporte ;
- des moyens de démodulation (11, 12, 18, 19) pour démoduler ledit signal électromagnétique (4),
- des moyens d'extraction (11, 12) pour extraire du signal électromagnétique démodulé les messages insérés dans lesdites trames objet,
- des moyens de décodage (11, 12) pour décoder les messages insérés dans les trames objet selon une méthode inverse de celle utilisée par l'objet nomade (7) identifié pour élaborer les trames objet.

## Patentansprüche

1. Verfahren zur Informationsübertragung im Nahbereich über eine elektromagnetische Verbindung zwischen
- einer Mehrzahl von nomadischen Objekten (7) mit unterschiedlichen Merkmalen der Stromversorgungstechnik und der Kommunikationsmittel (8, 31, 32, 33, 35), insbesondere der Modulationsverfahren und/oder der Kommunikationsprotokolle, einerseits
- und mindestens einem universellen Lesegerät (1) andrerseits, das bei beliebigen Merkmalen der nomadischen Objekte (7) verwendet werden kann,
wobei das Verfahren die folgenden Schritte aufweist:
- Das universelle Lesegerät (1) sucht (2, 11, 12, 17, 18, 19) die nomadischen Objekte (7), die sich in seinem Erfassungsbereich (4) befinden, indem es Suchsignale gemäß den verschiedenen Modulationsverfahren aussendet;
- jedes nomadische Objekt, das die Suchsignale des universellen Lesegeräts (1) empfängt, erzeugt ein Echosignal gemäß seinem eigenen Protokoll (8, 31, 32, 33, 35),
**dadurch gekennzeichnet, daß**
- das universelle Lesegerät (1) jedes Echosignal analysiert (11, 12) und daraus das spezifische vom identifizierten nomadischen Objekt verwendete Protokoll (35) ableitet;
- das universelle Lesegerät (1) fügt gemäß dem spezifischen Protokoll die auszusendenden Nachrichten in Lesegerät-Rahmen ein (11, 12), die vom identifizierten nomadischen Objekt (7) interpretiert werden können;
- das universelle Lesegerät (1) sendet (2, 14, 15) an das identifizierte nomadische Objekt (7) ein elektromagnetisches Signal (4), das gemäß den Lesegerät-Rahmen moduliert ist.

2. Verfahren nach Anspruch 1, das außerdem mindestens einen der folgenden Verfahrensschritte enthält:
- Das identifizierte nomadische Objekt (7) fügt gemäß dem spezifischen Protokoll die auszusendenden Nachrichten in Objektrahmen ein (31, 35);
- das identifizierte nomadische Objekt (7) moduliert (31, 32, 33, 38) gemäß den Objektrahmen ein elektromagnetisches Signal (4);
- das universelle Lesegerät (1) demoduliert (11, 12, 17, 18, 19) das elektromagnetische Signal-und entnimmt daraus (11, 12) die in die Objektrahmen eingefügten Nachrichten;
- das universelle Lesegerät (1) dekodiert (11, 12) die in die Objektrahmen eingefügten Nachrichten gemäß einem inversen Verfahren zu dem vom identifizierten nomadischen Objekt (7) verwendeten Verfahren, um die Objektrahmen zu erarbeiten.

3. Verfahren nach einem beliebigen der Ansprüche 1 und 2, **dadurch gekennzeichnet, daß** das universelle Lesegerät (1) durch drahtlose Übertragung dem nomadischen Objekt (7) die Energie übermittelt, die es für den Nachrichtenverkehr mit dem universellen Lesegerät (1) benötigt. erlaubt.

4. System zur Informationsübertragung über eine elektromagnetische Verbindung im Nahbereich zwischen
- einer Mehrzahl von nomadischen Objekten (7) mit unterschiedlichen Merkmalen der Stromversorgungstechnik und der Kommunikationsmittel (8, 31, 32, 33, 35), insbesondere der Modulationsverfahren und/oder der Kommunikationsprotokolle, einerseits
- und mindestens einem universellen Lesegerät (1) andrerseits, das bei beliebigen Merkmalen der nomadischen Objekte (7) verwendet werden kann,
wobei das System so ausgebildet ist, daß
- das universelle Lesegerät (1) Suchmittel (2, 11, 12, 17, 18, 19) zur Suche der nomadischen Objekte (7) enthält, die sich in seinem Erfassungsbereich (4) befinden, wobei die Suchmittel ein Suchsignal gemäß den verschiedenen Modulationsverfahren aussenden;
- jedes nomadische Objekt (7) Mittel zur Signalerzeugung (8, 31, 32, 33, 35) enthält, die, betätigt durch das Suchsignal in einer der verschiedenen Modulationsarten, ein Echosignal gemäß seinem eigenen Protokoll (35) erzeugt,
**dadurch gekennzeichnet, daß**
- das universelle Lesegerät (1) Mittel (11, 12) enthält, um das Echosignal zu analysieren und daraus das spezifische vom identifizierten nomadischen Objekt (7) angewendete Protokoll abzuleiten (35);
- das universelle Lesegerät (1) Einfügungsmittel (11, 12) enthält, um gemäß dem spezifischen Protokoll die auszusendenden Nachrichten in Lesegerät-Rahmen einzufügen, die vom identifizierten nomadischen Objekt (7) interpretiert werden können;
- das universelle Lesegerät (1) Sendemittel (2, 14, 15) enthält, um an das identifizierte nomadische Objekt (7) ein elektromagnetisches Signal (4) zu senden, das mit dem Lesegerät-Rahmen moduliert ist.

5. System nach Anspruch 4, bei dem
- das identifizierte nomadische Objekt (7) Einfügungsmittel (8, 31, 32, 33, 34, 35) enthält, um gemäß dem spezifischen Protokoll die auszusendenden Nachrichten in Objektrahmen einzufügen,
- das identifizierte nomadische Objekt (7) Modulationsmittel (31, 32, 33, 34, 38) enthält, um gemäß den Objektrahmen ein elektromagnetisches Signal zu modulieren,
- das universelle Lesegerät (1) Demodulationsmittel (11, 12, 17, 18, 19), um das elektromagnetische Signal (4) zu demodulieren, und Extraktionsmittel (11, 12) enthält, um die in die Objektrahmen eingefügten Nachrichten zu extrahieren,
- das universelle Lesegerät (1) Dekodiermittel (11, 12) enthält, um die in die Objektrahmen eingefügten Nachrichten gemäß einem inversen Verfahren zu dem vom identifizierten nomadischen Objekt (7) verwendeten Verfahren zu dekodieren, um die Objektrahmen zu erarbeiten.

6. Universelles Lesegerät (1) das zum Austausch von Informationen mit einer Mehrzahl von nomadischen Objekten (7) über eine elektromagnetische Verbindung im Nahbereich bestimmt ist, die die unterschiedlichsten technischen Merkmale der Stromversorgung und der Kommunikationsmittel (8, 31, 32, 33, 34, 35) besitzen, insbesondere die unterschiedlichsten Modulationsverfahren und/oder Kommunikationsprotokolle,
wobei das universelle Lesegerät (1) aufweist:
- Suchmittel (2, 11, 12, 17, 18, 19), um die nomadischen Objekte (7) zu suchen, die sich in seinem Erfassungsbereich (4) befinden, wobei die Suchmittel ein Suchsignal gemäß den unterschiedlichen Modulationsverfahren aussendet, das die Erzeugung eines Echosignals durch das betreffende nomadische Objekt (7) gemäß dem eigenen Protokoll des betreffenden nomadischen Objektes (7) auslöst,
und wobei das Lesegerät **gekennzeichnet ist durch**
- Analysemittel (11, 12) zur Analyse des Echosignals und zur Ableitung des vom betreffenden nomadischen Objekt (7) verwendeten spezifischen Protokolls,
- Einfügemittel (11, 12), um gemäß dem spezifischen Protokoll die auszusendenden Nachrichten in vom identifizierten nomadischen Objekt (7) interpretierbare Lesegerät-Rahmen einzufügen,
- Sendemittel (2, 11, 12, 14, 15), um an das identifizierte nomadische Objekt (7) ein elektromagnetisches Signal (4) auszusenden, das gemäß den Lesegerät-Rahmen moduliert ist.

7. Universelles Lesegerät (1) nach Anspruch 6, derart, daß, sofern das identifizierte nomadische Gerät (7) aufweist:
- Einfügungsmittel (31, 32, 33, 34, 35), um die auszusendenden Nachrichten gemäß dem spezifischen Protokoll in Objektrahmen einzufügen,
- Modulationsmittel (32, 33, 34, 38), um ein elektromagnetisches Signal gemäß den Objektrahmen zu modulieren.
das universelle Lesegerät (1) aufweist:
- Demodulationsmittel (11, 12, 18, 19), um das elektromagnetische Signal (4) zu demodulieren,
- Extraktionsmittel (11, 12), um aus dem demodulierten elektromagnetischen Signal die in die Objektrahmen eingefügten Nachrichten zu entnehmen,
- und Dekodiermittel (11, 12), um die in die Objektrahmen eingefügten Nachrichten gemäß einem inversen Verfahren zu dem vom identifizierten nomadischen Objekt zur Bildung der Objektrahmen verwendeten Verfahren zu dekodieren.

## Claims

1. A process for transferring, by close electromagnetic connection, data between
- on the one hand, a plurality of nomad objects (7) with different technical feed characteristics and communication means (8, 31, 32, 33, 35), particularly different modulation methods and/or communication protocols, and
- on the other hand, at least one universal reader (1) capable of being used whatever the characteristics of the nomad objects (7);
said process including the following steps:
- said universal reader (1) searches (2, 11, 12, 17, 18, 19) for said nomad objects (7) which are in its field of detection (4) by emitting a signal scanning the different modulation modes,
- each nomad object, receiving the scanning signal from said universal reader (1) produces (8, 31, 32, 33, 35) an echo signal according to its specific protocol,
**characterized in that**
- said universal reader (1) analyses (11, 12) each echo signal and deduces from it the specific protocol (35) applied by the identified nomad object (7),
- said universal reader (1) inserts (11, 12), in accordance with said specific protocol, the messages to be emitted into reader frames which can be interpreted by the identified nomad object (7);
- said universal reader (1) emits (2, 14, 15) to the identified nomad object (7) an electromagnetic signal (4) modulated according to said reader frames.

2. A process according to Claim 1 including, moreover, at least one of the following steps:
- the identified nomad object (7) inserts (31, 35), in accordance with said specific protocol, the messages to be emitted into object frames,
- the identified nomad object (7) modulates (31, 32, 33, 38) according to said object frames an electromagnetic signal (4),
- said universal reader (1) demodulates (11, 12, 17, 18, 19) said electromagnetic signal by extracting (11, 12) the messages inserted in said object frames;
- said universal reader (1) decodes (11, 12) the messages inserted in the object frames according to a reverse method of that used by the identified nomad object (7) to generate the object frames.

3. A process according to any one of the Claims 1 or 2 such that the universal reader (1) supplies, by remote transmission, to the nomad object (7) the energy required to provide communication with the universal reader (1).

4. A system for transferring, by close electromagnetic connection, data between,
- on the one hand, a plurality of nomad objects (7) with different technical feed characteristics and communication means (8, 31, 32, 33, 35), particularly different modulation methods and/or communication protocols, and
- on the other hand, at least one universal reader (1) capable of being used whatever the characteristics of the nomad objects (7);
said system being such that:
- said universal reader (1) comprises search means (2, 11, 12, 17, 18, 19) for searching for nomad objects (7) which are in its field of detection (4); said search means emit a signal scanning the different modulation modes;
- each nomad object (7) comprises signals production means (8, 31, 32, 33, 35); said signals production means, activated by said modulation modes scanning signal, producing an echo signal in accordance with the specific protocol (35) of the nomad object (7) under consideration;
**characterized in that**
- said universal reader (1) comprises analysis means (11, 12) for analysing said echo signal and deducing from it the specific protocol (35) applied by the nomad object (7) under consideration;
- said universal reader (1) comprises insertion means (11, 12) for inserting, in accordance with said specific protocol, the messages to be emitted into reader frames which can be interpreted by the identified nomad object (7);
- said universal reader (1) comprises emission means (2, 14, 15) for emitting to the identified nomad object (7) an electromagnetic signal modulated according to said reader frames.

5. A system according to Claim 4, such that:
- the identified nomad object (7) comprises insertion means (8, 31, 32, 33, 34, 35) for inserting, in accordance with said specific protocol, the messages to be emitted into object frames;
- the identified nomad object (7) comprises modulation means (31, 32, 33, 34, 38) for modulating according to said object frames an electromagnetic signal;
- said universal reader (1) comprises demodulation means (11, 12, 17, 18, 19) for demodulating said electromagnetic signal (4) and comprises extraction means (11, 12) for extracting the messages inserted in said object frames;
- said universal reader (1) comprises decoding means (11, 12) for decoding the messages inserted in the object frames according to a reverse method of that used by the identified nomad object (7) to generate the object frames.

6. A universal reader device (1) intended to be used to exchange, by close electromagnetic connection, data with a plurality of nomad objects (7) with different technical feed characteristics and communication means (8, 31, 32, 33, 34, 35), particularly different modulation methods and/or communication protocols;
said universal reader device (1) comprises:
- search means (2, 11, 12, 17, 18, 19) for searching for nomad objects (7) which are in its field of detection (4); said search means emitting a signal scanning the different modulation modes; said scanning signal triggering the production of an echo signal by the nomad object (7) concerned, in accordance with the specific protocol of the nomad object (7) concerned, the reader device being **characterized by**
- analysis means (11, 12) for analysing said echo signal and deducing from it the specific protocol (35) applied by the nomad object (7) concerned,
- insertion means (11, 12) for inserting, in accordance with said specific protocol, the messages to be emitted into reader frames which can be interpreted by the identified nomad object (7),
- emission means (2, 11, 12, 14, 15) for emitting, to the identified nomad object (7), an electromagnetic signal (4) modulated according to said reader frames.

7. A universal reader device (1) according to Claim 6 such that in the event of the identified nomad object (7) comprising:
- insertion means (31, 32, 33, 34, 35) for inserting, in accordance with said specific protocol, the messages to be emitted into object frames and,
- modulation means (32, 33, 34, 38) for modulating according to said object frames an electromagnetic signal;
said universal reader (1) comprises:
- demodulation means (11, 12, 18, 19) for demodulating said electromagnetic signal (4);
- extraction means (11, 12) for extracting from the demodulated electromagnetic signal the messages inserted in said object frames,
- decoding means (11, 12) for decoding the messages inserted in the object frames according to a reverse method of that used by the identified nomad object (7) to generate the object frames.
